# EUROPEAN PATENT APPLICATION

(11) **EP 2 127 996 A2**
(43) Date of publication of application: **02.12.2009**
(21) Application number: 08425785.6
(22) Date of filing: 09.12.2008
(51) Int. Cl.: B62B 9/00

(54) **Auxiliary standing board for pushchairs, prams and the like**

(30) Priority: 30.05.2008 IT BS20080017 U
(71) Applicant: L. Rossi S.r.l., 24060 Telgate (BG) (IT)
(72) Inventor: Rossi, Sergio, 24060 Telgate (Brescia) (IT)
(74) Representative: Sangiacomo, Fulvia

(57) **Abstract**

The invention concerns an auxiliary standing board for children's pushchairs, buggies and prams, which can be connected to the frame of these vehicles by connecting means comprising two supporting arms (13) associated with the sides of a horizontal board (12) and at a variable distance between them and with regard to said sides. The supporting arms (13) can move in respective vertical planes to adjust the inclination with regard to the horizontal board and each equipped with a attaching means (31) to constrain a component of the frame. Each attaching means (31) is movable and can be positioned along the respective supporting arm (13) and revolves around a pin (30) for its orientation with regard to the supporting arm and depending on the inclination of the component of the frame it is constrained to.

## Description

This invention concerns the products for infants field in general, and refers in particular to a standing board to be attached to the frame of pushchairs, buggies and prams and the like, at least for the transport of a child in a standing position.

Children's standing to be attached to the frame of pushchairs, prams and the like so as to be able either to transport another child in a standing position or various objects such as shopping bags, etc. are already known. Some standing boards of the type taken into consideration herein are disclosed in the documents ES 1066244U, WO 00/10861, WO 2007/030054. Each auxiliary standing board is basically made up of a horizontal board that can be made of any material, provided with wheels to support it and to travel on the ground, complete with means for its connection to the frame, usually at the back of a pushchair, pram or some similar means for transporting children.

It is however an objective of this invention to provide an auxiliary standing board for the above stated use, manufacture by using an original combination of elements capable to be easily assembled without the need for fixing means and particular tools and with the possibility of different adjustments depending on the frame to which, from time to time, the standing board needs to be attached to.

Another objective of the invention is, therefore, to provide a standing board easy and rapid to adapt and attach to any pushchair, pram and the like, guaranteeing in all cases high overall stability and safety characteristics.

Yet another objective of the invention is to provide a standing board which components can be kept disjoined to facilitate storing, packing and transport where overall size is minimised, without however influencing the ease of assembly and preparation for use.

These objectives and evident advantages which derive from them are reached, in accordance with the invention, by an auxiliary standing board to be attached to the frame of pushchairs, prams and the like, at least for the transport of a child in a standing position, according to claim 1 and where other aspects characterizing attaching and adjusting means of the standing board appear evident from the other dependent claims.

Greater details of the invention will be more evident from the continuation of the description made with reference to the enclosed indicative and not limiting drawings, in which:

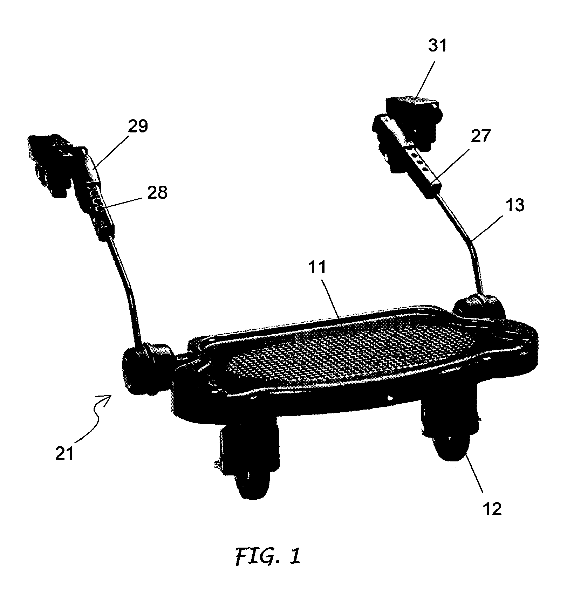

Fig. 1 is a photographic reproduction of the standing board;

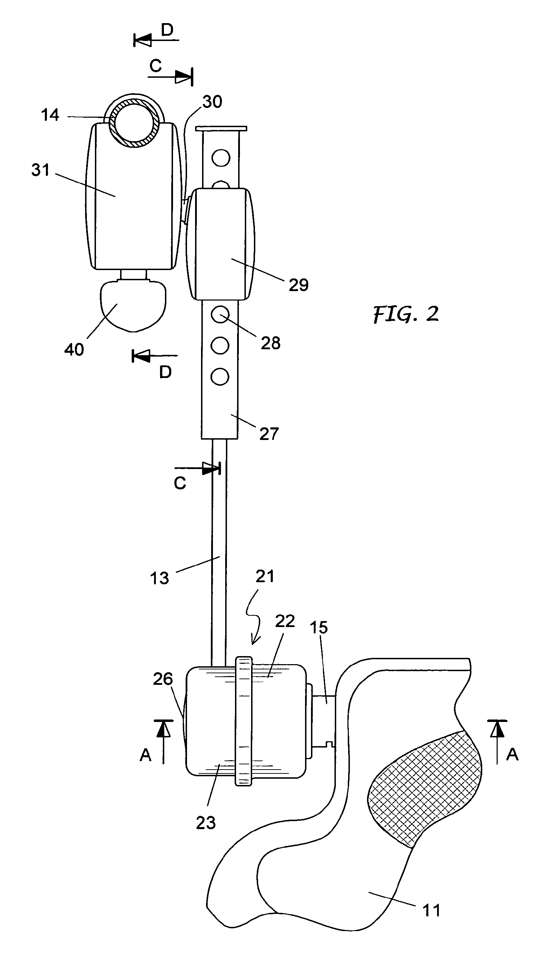

Fig. 2 is a portion of the standing board in plan view;
Fig. 3 is a section view of the standing board according to arrows A-A in Fig. 2;
Fig. 4 is a section view according to arrows B-B in Fig. 3;
Fig. 5 is a partial section view according to arrows C-C in Fig. 2; and
Fig. 6 is a part section achieved according to line D-D in Fig. 2.

As represented, the standing board basically comprises a horizontal board 11, carried on two supporting wheels 12 to run on the ground and provided laterally with two supporting arms 13, one on each side, provided with means associated for adjusting and attaching the standing board with regards to the frame of a pushchair, pram or the like.

The board 11 can be made advantageously by a plastic material; the wheels 12 are the caster type; the supporting arms 13 can be tilted in respective vertical planes with regard to the horizontal board and at a variable in distance from the sides of said board. Of the frame of a pushchair or the like only a part of one component 14 is represented.

Each supporting arm 13 is attached to a rack rod 15 that is housed in a seat 16 provided in a side of the board 11 oriented crossways to the latter. The rack rod 15 can be provided with a reinforcing core 15'. It slides however in said seat 16 and has toothing 15" facing towards a toothed stop means 17 mounted in a respective opening 18 provided in the board.

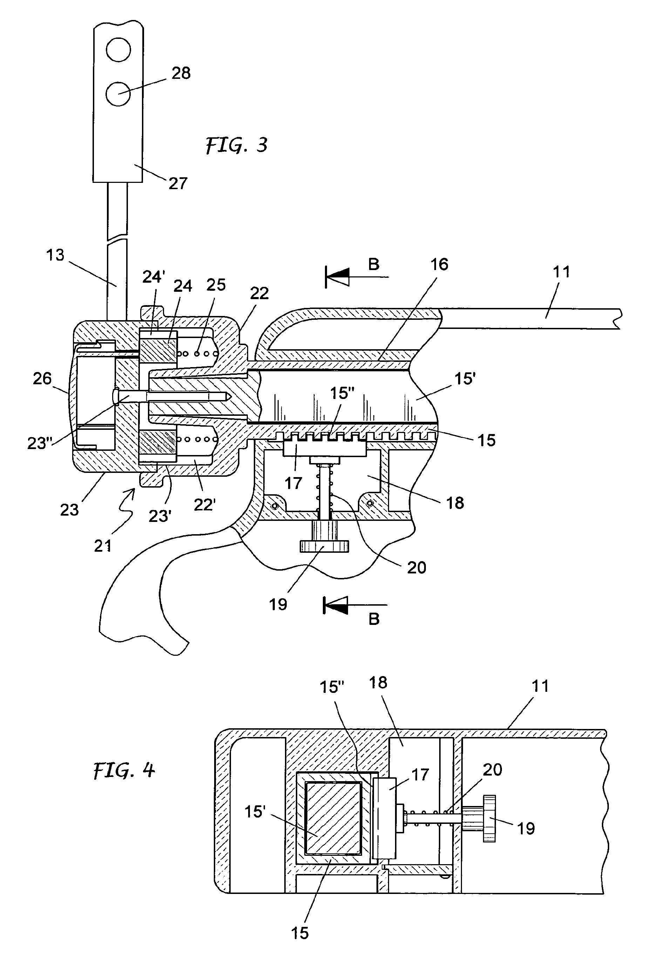

The toothed stop means 17 moves between a retracted position for releasing the rack rod 15 by means of a manual tie rod 19 and a forward position for engaging with the toothing of the rack rod 15 by means of a spring 20 -Figs 3 and 4. In this way, when the toothed stop means 17 is in the retracted position, the respective rack rod 15 can be positioned longitudinally to adjust the distance between the two supporting arms 13 and the sides of the board 11; when the toothed stop means 17 is in the forward position, it blocks the rack rod 15 establishing the position required.

In order to be able to vary the inclination, each supporting arm 13 is associated with respective rack rod 15 by means of a toothed type coupling 21. As can be seen in Fig. 3, this coupling comprises: a fixed cap member 22 attached to or integral with the respective rack rod 15 and having internal toothing 22', a rotating element 23 turning on an axis 23" fixed to the head of the rack rod 15, attached to the supporting arm 13 and also having internal toothing 23', and a coupling ring 24 placed between said two fixed and turning elements 22, 23, movable axially and also equipped with external toothing 24'.

This coupling ring 24 is stressed by a spring 25 and thrust by the latter normally into a first position in which its external toothing mates at the same time with the internal toothing of both the fixed and turning elements 22, 23, defining and establishing the inclination of the supporting arm 13 depending on the rotation of the revolving elements compared to the fixed one. The coupling ring 24 is movable moreover by means of a pushbutton 26, in a second position in which its toothing 24' is disengaged from the toothing of the revolving element 23, so that the latter is free to turn so as to be able to change and adjust the inclination of the respective supporting arm 13 according to requirements.

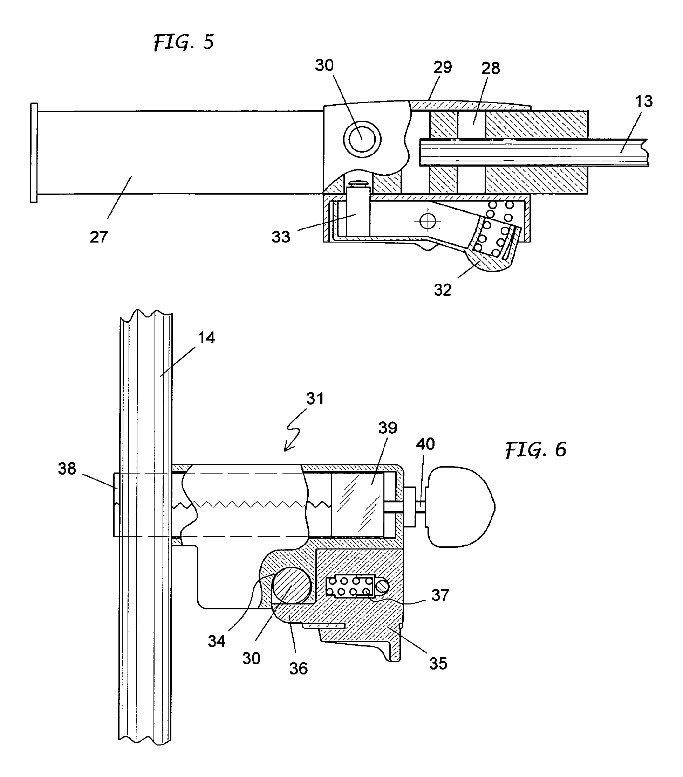

Each supporting arm 13 is furthermore provided at its end, with a terminal 27 having a row of holes 28 and along which is mounted and slides a positioning slider 29. This slider 29 has on one side a connecting pin 30 designed to couple with a means attaching 31 the standing board to the frame 14 of a pushchair or the like. The slider 29 is movable so as to be able to vary its position along its respective arm 13 and to define correspondingly also the distance of the attaching means 31 from the board 11 depending on the structure of the frame it is going to be attached to. For such positioning the slider 29 is provided with a spring operated pushbutton 32 with a pin 33 designed to engage from time to time with said holes 28 as shown in Fig. 5.

As regards to the attaching means 31- Fig. 6- on one side, it has a an indent 34 made to receive the connecting pin 30 on board the slider 29 and is provided with a slide element 35 with an opening and closing tongue of said indent. In fact, the slide element 35 can be moved back by hand to open said indent to receive and extract the connecting pin 30 and it is stressed and thrust by a spring 37 into the closed position of said indent 34 to permanently hold the connecting pin once it has been inserted.

On the other side, the attaching means 31 is provided with a tie system to attach it to the component of the frame 14 of a pushchair or the like. The tie system comprises a clamp 38, which is connected to a pull block 39, which encloses the component of the frame 14 and is tightened around it by means of a screw 40 engaging with the pull block 39.

In this way the standing board as an assembly can be adapted and connected to the frame of pushchairs, prams or the like by adjusting each time the distance and inclination of the supporting arms, as well as the position of the connections along said arms and relative verticality or inclination of the components of the frame they are fixed to.

## Claims

1. An auxiliary standing board to be connected to the components of the frame of children's pushchairs, prams and buggies, comprising a horizontal board equipped with caster type wheels for support and running on the ground and provided with connecting means for fixing it to respective components of said frame, **characterized in that** said connecting means comprise two supporting arms (13) associated with the sides of said horizontal board (12) and at a varying distance between them and with regard to the board sides, **in that** said supporting arms (13) can move in respective vertical planes to vary the inclination with regard to the horizontal board and each is equipped with an attaching means (31) to fix it to a component of the frame, and each attaching means (31) can be movable and positioned along the respective supporting arm (13) and turning around a pin (30) to be oriented with regard to the supporting arm and depending on the inclination of the component of the frame it is attached to.

2. A standing board according to claim 1, wherein each supporting arm (13) is supported by a rack rod (15) housed and moving in a seat (16) extending in a transversal direction from a side of the horizontal board (11) and having toothing facing towards a toothed stop means (17) positioned and movable in front of the toothing of said rack rod (15), said toothing stop means being movable between a blocked and a released positions of the rack rod, the block position being ensured by a spring (20), the release position being caused manually by means of a tie rod (19).

3. A standing board according to claims 1 and 2, wherein each supporting arm (13) is associated with respective rack rod (15) by means of a toothed type coupling (21) that includes a permanent cap member (22) attached to or integral with the respective rack rod 15 and having internal toothing, a revolving element (23) fixed to said supporting arm, turning with regard to the fixed element and also having internal toothing, and a coupling ring (24) positioned and movable axially between said two fixed and turning elements and having external toothing, and wherein said coupling ring (24) can be moved into a blocked position, in which its external toothing engages with the internal toothing of both the fixed and revolving elements (22, 23) to define and establish the inclination of the supporting arm (13), and in a position for releasing the toothing of the revolving element (23) to vary the inclination of said supporting arm.

4. A standing board according to claim 3, wherein said coupling ring (24) is movable and held in said blocked position by a spring (25) and in said release position by a pushbutton (26).

5. A standing board according to any of the previous claims, wherein every supporting arm (13) is provided with a terminal (27) complete with a row of holes (28) and having a positioning slider (29), and wherein said slider has, on one side, a connecting pin (30) designed to couple with a means of attaching (31) the standing board to a respective component of the frame (14) of a pushchair or the like and, on the other side, a spring pushbutton (32) with a pin (33) designed to engage said holes (28) from time to time to vary the position of said attaching means along the supporting arm (13).

6. A standing board according to claim 5, wherein the means of attaching (31) is provided with a tie system to attach it to the respective component of the frame (14), said tie system comprising a clamp (36) connected to a pull block (37), enclosing the component of the frame and tightened around it by means of a screw interacting with said pull block.
